**Europäisches Patentamt**

**European Patent Office**

**Office européen des brevets**

(19)

(11) Veröffentlichungsnummer: **0 591 816 A2**

(12) **EUROPÄISCHE PATENTANMELDUNG**

(21) Anmeldenummer: **93115601.2**

(22) Anmeldetag: **28.09.93**

(51) Int. Cl.5: **G01F 23/28**

(30) Priorität: **05.10.92 DE 4233324**

(43) Veröffentlichungstag der Anmeldung: **13.04.94 Patentblatt 94/15**

(84) Benannte Vertragsstaaten: **BE CH DE ES FR GB IT LI LU NL**

(71) Anmelder: **KROHNE MESSTECHNIK GMBH & CO. KG**
**Ludwig-Krohne-Strasse 5**
**D-47058 Duisburg(DE)**

(72) Erfinder: **van der Pol, Ronald**
**Victor-Hugo-Straat 27**
**NL-5924 AK Venlo(NL)**

(74) Vertreter: **Gesthuysen, Hans Dieter, Dipl.-Ing.**
**Patentanwälte Gesthuysen + von Rohr**
**Postfach 10 13 33**
**D-45013 Essen (DE)**

(54) Verfahren zur Messung des Füllstandes einer Flüssigkeit in einem Behälter nach dem Radarprinzip.

(57) Beschrieben ist ein Verfahren zur Messung des Füllstandes einer Flüssigkeit in einem Behälter nach dem Radarprinzip, mit Hilfe einer ein Mikrowellensignal in Richtung auf den Flüssigkeitsspiegel und den Boden abstrahlenden, über dem Flüssigkeitsspiegel angeordneten Sendeantenne und mit Hilfe einer unter anderem ein am Flüssigkeitsspiegel reflektiertes Meßsignal und ein am Boden des Behälters reflektiertes Bodensignal empfangenden Empfangsantenne, bei welchem der tatsächliche Bodenabstand zwischen Sendeantenne bzw. Empfangsantenne und dem Boden des Behälters bekannt ist und bei welchem für die Flüssigkeit im Behälter die Dielektrizitätszahl und die Permeabilitätszahl zumindest annähernd bekannt sind.

Das erfindungsgemäße Verfahren ist auswertungstechnisch einfach und führt zu zuverlässigen Ergebnissen, und zwar dadurch, daß die tatsächliche Füllstandshöhe der Flüssigkeit im Behälter rechnerisch aus der Laufzeit des Bodensignals, dem tatsächlichen Bodenabstand, der Dielektrizitätszahl und der Permeabilitätszahl der Flüssigkeit zumindet annähernd bestimmt wird.

EP 0 591 816 A2

Die Erfindung betrifft ein Verfahren zur Messung des Füllstandes einer Flüssigkeit in einem Behälter nach dem Radarprinzip, mit Hilfe einer ein Mikrowellensignal in Richtung auf den Flüssigkeitsspiegel und den Boden abstrahlenden, über dem Flüssigkeitsspiegel angeordneten Sendeantenne und mit Hilfe einer u. a. ein am Flüssigkeitsspiegel reflektiertes Meßsignal und ein am Boden des Behälters reflektiertes Bodensignal empfangenden Empfangsantenne, bei welchem der tatsächliche Bodenabstand zwischen der Sendeantenne bzw. der Empfangsantenne und dem Boden des Behälters bekannt ist und bei welchem für die Flüssigkeit im Behälter die Dielektrizitätszahl und die Permeabilitätszahl zumindest annähernd bekannt sind. Bei diesem bekannten Verfahren ist es üblich, andere Signale als das Meßsignal, aber Störsignale, insbesondere das Bodensignal als Störsignal, auszufiltern oder in anderer Weise meßtechnisch zu berücksichtigen.

Neben anderen Verfahren zur Messung des Füllstandes einer Flüssigkeit in einem Behälter ist die Flüssigkeitsmessung nach dem Radarprinzip insbesondere für größere Behälter z. B. in Tankanlagen verbreitet. Das Radarprinzip beruht auf der Eigenschaft elektromagnetischer Wellen, sich innerhalb eines homogenen nichtleitenden Mediums mit konstanter Geschwindigkeit auszubreiten und an der Grenzfläche unterschiedlicher Medien einen Teil der Energie zu reflektieren. Aus der gemessenen Zeitdifferenz, die zwischen ausgesendeten und wieder empfangenen Wellen entsprechender Wellenlänge verstreicht, läßt sich die Entfernung einer angestrahlten Grenzfläche bestimmen. Um die Laufzeit zwischen dem Aussenden und dem Wiedereintreffen des Meßsignals am Aussendeort definiert messen zu können, müssen die elektromagnetischen Wellen moduliert werden. Besonders häufig wird die Impulsmodulation verwendet. Diese hat den Vorteil, daß eine gemeinsame Sende- und Empfangsantenne verwendet werden kann, wenn während des Sendens der Empfangszweig über eine Sende-/Empfangsweiche vom gemeinsamen Wellenleiter getrennt wird.

Das Radarprinzip läßt sich mit elektromagnetischen Wellen eines weiten Frequenzbereichs realisieren, die Frequenzwahl ist durch verschiedene Randbedingungen zu denen auch und besonders der Anwendungsbereich gehört, bestimmt. Für die Messung des Füllstandes einer Flüssigkeit in einem Behälter ist der Mikrowellenbereich passend. Besonders in diesem Bereich hat sich neben der Impulsmodulation auch eine Frequenzmodulation des Mikrowellensignals als Modulationsart durchgesetzt (FMCW-Radar). Dabei wird die Modulation nicht durch Impulse und Impulspausen realisiert, sondern bei kontinuierlicher Abstrahlung des Mikrowellensignals durch eine meist sägezahnförmig mit der Zeit ansteigende und am Ende des Anstiegs wieder zurückspringende Frequenz.

Die Füllstandshöhe im Behälter errechnet sich aus der bekannten Innenhöhe des Behälters, also dem tatsächlichen Bodenabstand zwischen Antenne und Boden des Behälters, und dem freien Abstand zwischen Flüssigkeitsspiegel und Antenne. Dieser Abstand kann bei bekannter Signallaufzeit und bekannter Ausbreitungsgeschwindigkeit des Mikrowellensignals aus dem vom Flüssigkeitsspiegel reflektierten Meßsignal ermittelt werden.

Tatsächlich ist das Meßsignal häufig stark gestört. Insbesondere bei einer Flüssigkeit mit relativ niedriger Dielektrizitätszahl (beispielsweise $\epsilon_r$ unter 2 wie z. B. bei Paraffin) wird der überwiegende Teil des Mikrowellensignals nicht an der Grenzfläche - Flüssigkeitsspiegel - reflektiert, sondern am normalerweise leitfähigen Boden des Behälters. Wenn das Bodensignal nicht, wie bei großer Füllhöhe und/oder elektrischer Leitfähigkeit der Flüssigkeit in der Flüssigkeit ganz oder überwiegend absorbiert wird, stellt das ein erhebliches auswertungstechnisches Problem dar. Dieses wird um so größer, je geringer die Füllstandshöhe ist. Hinzu kommt, daß auch sonstige Quellen für Störsignale vorhanden sind (Streuungen), so daß die meßtechnische Auswertung des Spektrums der empfangenen Signale sich als häufig schwierig erweist. Jedenfalls ist erheblicher filtertechnischer Aufwand zu betreiben.

Der Erfindung liegt nun die Aufgabe zugrunde, das bekannte Verfahren so auszugestalten und weiterzubilden, daß es auswertungstechnisch einfacher zu zuverlässigen Ergebnissen führt.

Das erfindungsgemäße Verfahren ist dadurch gekennzeichnet, daß die tatsächliche Füllstandshöhe der Flüssigkeit im Behälter rechnerisch aus der Laufzeit des Bodensignals, dem tatsächlichen Bodenabstand, der Dielektrizitätszahl und der Permeabilitätszahl der Flüssigkeit zumindest annähernd bestimmt wird. Erfindungsgemäß wird das eigentlich das wesentliche Störsignal darstellende Bodensignal meßtechnisch ausgewertet. Es ist nämlich erkannt worden, daß dann, wenn man die Dielektrizitätszahl und die Permeabilitätszahl der Flüssigkeit kennt, das Bodensignal die Information über den in der Flüssigkeit zurückgelegten Weg und damit über die Füllstandshöhe der Flüssigkeit enthält. Tatsächlich ist nämlich die Ausbreitungsgeschwindigkeit des Mikrowellensignals in der Flüssigkeit entsprechend der Dielektrizitätszahl und der Permeabilitätszahl der Flüssigkeit geringer als oberhalb des Flüssigkeitsspiegels, wo jedenfalls praktisch immer von dem Multiplikator 1 ausgegangen werden kann. Rechnerisch gemäß der zuvor beschriebenen Lehre ausgewertet kommt man aus dem scheinbaren Bodenabstand, der wegen der durch die Flüssigkeit erhöhten Laufzeit des Mikrowellensignals größer ist als der tatsächliche Bodenabstand, über die angegebene Verhältnisrechnung zu der tatsächlichen Füllstandshöhe.

Es mag unterschiedliche Möglichkeiten geben, die rechnerische Auswertung gemäß der Lehre, die der Patentanspruch 1 vermittelt, in einer Formel wiederzugeben; der Patentanspruch 2 gibt eine besonders zweckmäßige Auswerteformel an, die deshalb vorzugsweise angewendet wird.

Besondere Bedeutung gewinnt das erfindungsgemäße Verfahren dann, wenn man es mit dem bislang bekannten Verfahren mit unmittelbarer Messung des Meßsignals selbst verbindet. Einerseits gibt das eine doppelte Sicherheit, andererseits gibt dies die Möglichkeit, auch bei nur annähernd bekannter Dielektrizitätszahl und Permeabilitätszahl der Flüssigkeit zu richtigen Ergebnissen zu gelangen. Dabei wird dann so gearbeitet, daß im Spektrum der empfangenen Signale - Meßsignal und Störsignal - mittels des rechnerisch ermittelten Wertes für die tatsächliche Füllstandshöhe eines der Signale als das Meßsignal identifiziert wird. Die zutreffende Auswertung durch richtige Identifizierung des Meßsignals gelingt auch bei einer Fehlerbandbreite für die Dielektrizitäts- und/oder Permeabilitätszahlen dadurch, daß unter Berücksichtigung der Fehlerbandbreite der Dielektrizitäts- und Permeabilitätszahlen $\epsilon_r$ und $\mu_r$ und des Bodensignals der Wert für die tatsächliche Füllstandshöhe rechnerisch mit einer bestimmten Fehlerbandbreite ermittelt und mit dieser Fehlerbandbreite als Erkennungsfenster über das Spektrum der empfangenen Signale - Meßsignal und Störsignal - gelegt wird.

Das erfindungsgemäße Verfahren eignet sich für alle Arten der Meßtechnik nach dem Radarprinzip, insbesondere also sowohl für Frequenzmodulation als auch für Impulsmodulation.

Im folgenden wird die Erfindung anhand einer erläuternden Zeichnung dargestellt. In der Zeichnung zeigt

Fig. 1 schematisch links die verschiedenen Signal-Verläufe in einem teilweise mit einer Flüssigkeit gefüllten Behälter, rechts eine zugeordnete Signalauswertung und

Fig. 2 eine Fig. 1 entsprechende Darstellung zur Erläuterung der verschiedenen Parameter der Auswertungsgleichung des erfindungsgemäßen Verfahrens sowie, rechts, des Prinzips der Signalauswertung bei Frequenzmodulation (FMCW-Radar).

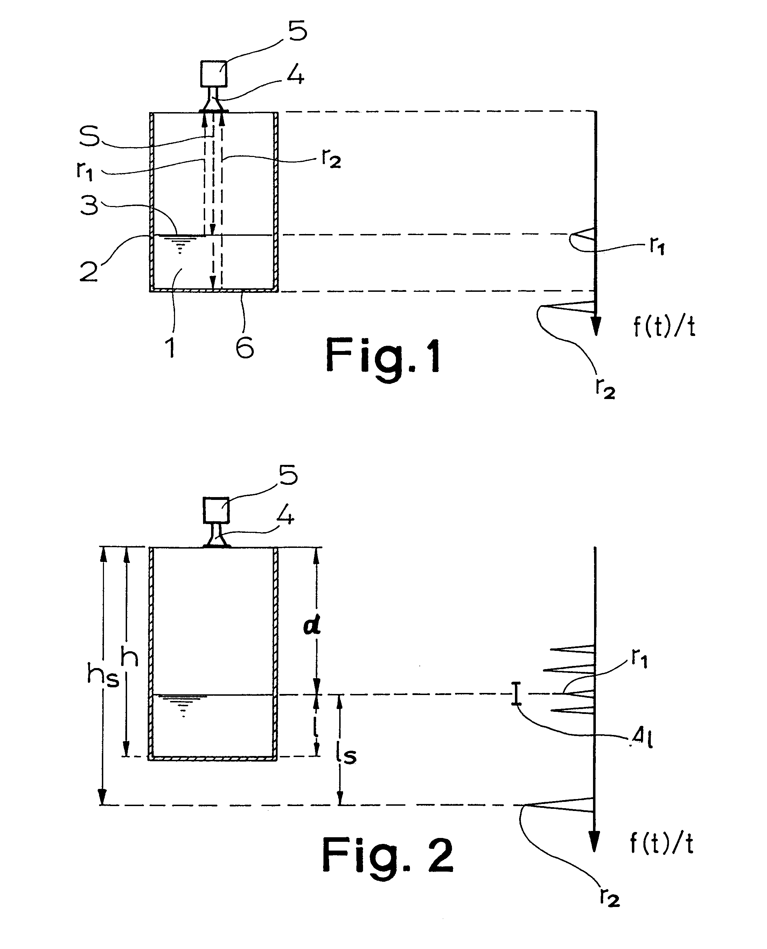

Anhand von Fig. 1 wird das Verfahren zur Messung des Füllstandes einer Flüssigkeit 1 in einem Behälter 2 nach dem Radarprinzip beschrieben. Bei diesem Verfahren wird von einer über dem Flüssigkeitsspiegel 3 angeordneten Antenne 4, die von einem Mikrowellengenerator 5 üblicher Bauart gespeist wird, ein Mikrowellensignal in Richtung des Flüssigkeitsspiegels 3 und des Bodens 6 des Behälters 2 abgestrahlt. Das gesendete Mikrowellensignal ist durch das Bezugszeichen s und nach unten gerichtete Pfeile, die das Auftreffen auf dem Flüssigkeitsspiegel 3 und dem Boden 6 des Behälters 2 andeuten, identifiziert.

Am Flüssigkeitsspiegel 3 wird ein Meßsignal $r_1$ reflektiert und von der Antenne 4 oder, hier nicht dargestellt, einer zweiten Antenne - Empfangsantenne - empfangen. Aus der für das Meßsignal $r_1$ ermittelten Laufzeit wird die Füllstandshöhe, Höhe des Flüssigkeitsspiegels 3 im Behälter 2, ermittelt. Jedenfalls ist das die normale, aus dem Stand der Technik bekannte Verfahrensweise. In Fig. 1 rechts ist schematisch die Signalauswertung dargestellt, man erkennt hier den Signalpeak für das Meßsignal $r_1$ auf einer Koordinate, die bei der vorgeschlagenen Frequenzmodulation (FMCW-Radar) das Frequenzspektrum darstellt (die Frequenz ändert sich zeitabhängig), bei der auch weit verbreiteten Impulsmodulation einfach eine Zeitkoordinate ist.

Andere Signale als das Meßsignal werden als Störsignale angesehen, das gilt insbesondere für das am Boden 6 reflektierte, meist relativ starke Bodensignal $r_2$, das in Fig. 1 eingezeichnet ist und in Fig. 1 rechts an der Koordinate auch zu sehen ist. Dieses wird entweder ausgefiltert oder anderweit meßtechnisch berücksichtigt.

Wenn man nun voraussetzt, was ohne weiteres vorausgesetzt werden kann, daß nämlich der tatsächliche Bodenabstand, also Abstand des Bodens 6 des Behälters 2 von der Antenne 4, bekannt ist, Bodenabstand h in Fig. 2, und wenn man ferner voraussetzt, daß für die Flüssigkeit 1 im Behälter die Dielektrizitätszahl $\epsilon_r$ und die Permeabilitätszahl $\mu_r$ zumindest annähernd bekannt sind, dann kann man mit der erfindungsgemäßen Verfahrensweise nicht das Meßsignal $r_1$ oder jedenfalls nicht nur das Meßsignal $r_1$ messen und auswerten, sondern auf das Bodensignal $r_2$ alleine oder jedenfalls zusätzlich als Informationsquelle zurückgreifen. Das ist im allgemeinen Teil der Beschreibung erläutert worden und wird anhand von Fig. 2 nochmals ergänzend beschrieben. Dabei zeigt hier d den freien Abstand oberhalb des Flüssigkeitsspiegels 3, I ist die tatsächliche Füllstandshöhe und $I_s$ ist eine scheinbare Füllstandshöhe, die sich daraus ergibt, daß die Ausbreitungsgeschwindigkeit $c_{fl}$ in der Flüssigkeit 1 geringer ist als die Ausbreitungsgeschwindigkeit $c_l$ im Raum oberhalb des Flüssigkeitsspiegels 3, der normalerweise gasgefüllt, insbesondere luftgefüllt ist.

Nach dem erfindungsgemäßen Verfahren wird auch für das Bodensignal $r_2$ die Laufzeit und aus dieser Laufzeit ein scheinbarer Bodenabstand $h_s$ ermittelt. Das Verhältnis von scheinbarem Bodenabstand $h_s$ zum

tatsächlichen Bodenabstand h läßt auf das Verhältnis von scheinbarer Füllstandshöhe $l_s$ zu der, bislang unbekannten tatsächlichen Füllstandshöhe l rückschließen, da man nämlich in beiden Fällen den freien Abstand d oberhalb des Flüssigkeitsspiegels 3 als Konstante betrachten kann. Das Verhältnis von scheinbarer Füllstandshöhe $l_s$ zu tatsächlicher Füllstandshöhe l entspricht dem Verhältnis von Ausbreitungsgeschwindigkeit $c_l$ oberhalb des Flüssigkeitsspiegels 3 zu Ausbreitungsgeschwindigkeit $c_{fl}$ in der Flüssigkeit 1. Dieses Verhältnis ist wiederum nach physikalischen Gesetzen der Wurzel aus dem Produkt der Dielektrizitäts- und Permeabilitätszahlen $\epsilon_r$ und $\mu_r$ der Flüssigkeit gleich, wenn man Abweichungen von 1 im Gas oberhalb des Flüssigkeitsspiegels 3 vernachlässigt. Die Auswertungsgleichung lautet also in dieser Weise:

$$\frac{l_s}{l} = \frac{h_s - d}{h - d} = \frac{c_l}{c_{fl}} = \sqrt{\epsilon_r\, \mu_r}$$

Im einzelnen beruht diese Auswertung auf der überlegung, daß die tatsächliche Füllstandshöhe l sich als Differenz des tatsächlichen Bodenabstands h und des freien Abstands d oberhalb des Flüssigkeitsspiegels 3 ergibt. Wenn man nun den freien Abstand d aus der zuvor wiedergegebenen Gleichung ermitteln kann, was möglich ist, wenn man h, $\epsilon_r$ und $\mu_r$ kennt, so kann man unmittelbar l ermitteln. Aus der zuvor wiedergegebenen Gleichung folgt die Ermittlung von d nach folgender Auflösung:

$$h_s - d = \sqrt{\epsilon_r\, \mu_r}\,(h - d)$$

$$h_2 - h\sqrt{\epsilon_r\, \mu_r} = d\,(1 - \sqrt{\epsilon_r\, \mu_r})$$

$$d = h_s\frac{1}{1 - \sqrt{\epsilon_r\, \mu_r}} - h\,\frac{\sqrt{\epsilon_r\, \mu_r}}{1 - \sqrt{\epsilon_r\, \mu_r}}$$

Mittels der abschließenden AUswertung l = h - d kommt man dann zu dem gewünschten Ergebnis.

Erfindungsgemäß wird also die im Bodensignal $r_2$ enthaltene Information über die Laufzeitveränderung des Mikrowellensignals in der Flüssigkeit 1 extrahiert und daraus wird die tatsächliche Füllstandshöhe l ermittelt. Das hat den großen Vorteil, daß das regelmäßig relativ starke Bodensignal $r_2$ ausgewertet werden kann und nicht das regelmäßig relativ schwache Meßsignal $r_1$ im Spektrum der empfangenen Signale ausgefiltert werden muß. Die Auswertungstechnik ist also wesentlich einfacher.

Man kann also im Prinzip erfindungsgemäß aus dem Bodensignal $r_2$ die Füllstandshöhe l bestimmen, selbst wenn das Meßsignal $r_1$ selbst überhaupt nicht meßbar ist. Man kann das Bodensignal $r_2$ im erfindungsgemäßen Verfahren aber auch für eine zusätzliche Sicherheit bei der Feststellung des tatsächlichen Meßsignals $r_1$ nutzen. Das geschieht dadurch, daß im Spektrum der empfangenen Signale - Meßsignal und Störsignale - mittels des rechnerisch ermittelten Wertes für die tatscähliche Füllstandshöhe l eines der Signale als das Meßsignal $r_1$ identifiziertwird. Diesem Verfahren wird in der Praxis besondere Bedeutung zukommen, und zwar insbesondere dann, wenn die Dielektrizitätskonstante $\epsilon_r$ und/oder die Permeabilitätskonstante $\mu_r$ der Flüssigkeit 1 nur annähernd bekannt ist. Dann kann man nämlich so vorgehen, daß unter Berücksichtigung der Fehlerbandbreite von $\epsilon_r$ und $\mu_r$ und des Bodensignals $r_2$ der Wert für die tatsächliche Füllstandshöhe l rechnerisch mit einer bestimmten Fehlerbandbreite ermittelt und mit dieser Fehlerbandbreite als Erkennungsfenster über das Spektrum der tatsächlich empfangenen Signale gelegt wird. Das ist in Fig. 2 rechts mit dem Erkennungsfenster Δl angedeutet, in das nun das tatsächliche Meßsignal $r_1$ im Spektrum der insgesamt empfangenen Signale fällt. Dieses, an sich sehr kleine Meßsignal $r_1$ erkennt man als das "richtige" Signal im Spektrum, da es in das Erkennungsfenster Δl fällt.

Das zuvor erläuterte kombinierte Verfahren ist besonders verläßlich, setzt aber natürlich voraus, daß das Meßsignal $r_1$ überhaupt meßtechnisch erfaßbar ist. Wenn das so ist, kann man die Fehlerbandbreite bei dem aus dem Bodensignal $r_2$ ermittelten Wert, die in erster Linie daraus resultiert, daß die Dielektrizitätszahl $\epsilon_r$ und/oder der tatsächliche Bodenabstand h (seltener die Permeabilitätszahl $\mu_r$) nicht genau genaug bekannt sind, auswertungstechnisch berücksichtigen.

Den tatsächlichen Bodenabstand h kann man normalerweise durch Ausmessen des Behälters 2 ermitteln. Man kann auch eine Referenzmessung ohne Flüssigkeit 1 im Behälter 2 durchführen und daraus - über ein den tatsächlichen Bodenabstand wiedergebendes Bodensignal $r_2$ - den tatsächlichen Bodenabstand ermitteln. Ist das Meßsignal $r_1$ selbst ohne weiteres im Spektrum ermittelbar, so kann man aus diesem andere Parameter rückrechnen, beispielsweise d und $h_s$. Dazu muß man die oben wiedergegebenen Gleichungen nur nach unterschiedlichen Parametern hin auflösen.

Die Fig. 1 und 2 geben das erfindungsgemäße Verfahren bei einer Frequenzmodulation wieder, entsprechende Auswertungen erfolgen aber auch bei Impulsmodulation. Zum Verständnis der Frequenzmodulation ist zu Fig. 2 zu erläutern, daß die Frequenzlage bei Reflexion am Boden 6 bei Flüssigkeit 1 im Behälter 2 bei höheren Frequenzen liegt als bei leerem Behälter 2.

Im übrigen erkennt man in Fig. 2 rechts eben gut die Darstellung des Erkennungsfensters Δl, das die Identifizierung des Meßsignals $r_1$ aus dem Spektrum aller empfangenen Signale erlaubt.

**Patentansprüche**

1. Verfahren zur Messung des Füllstandes einer Flüssigkeit in einem Behälter nach dem Radarprinzip, mit Hilfe einer ein Mikrowellensignal in Richtung auf den Flüssigkeitsspiegel und den Boden abstrahlenden, über dem Flüssigkeitsspiegel angeordneten Sendeantenne und mit Hilfe einer unter anderem ein am Flüssigkeitsspiegel reflektiertes Meßsignal und ein am Boden des Behälters reflektiertes Bodensignal empfangenden Empfangsantenne, bei welchem der tatsächliche Bodenabstand zwischen Sendeantenne bzw. Empfangsantenne und dem Boden des Behälters bekannt ist und bei welchem für die Flüssigkeit im Behälter die Dielektrizitätszahl und die Permeabilitätszahl zumindest annähernd bekannt sind, **dadurch gekennzeichnet**, daß die tatsächliche Füllstandshöhe der Flüssigkeit im Behälter rechnerisch aus der Laufzeit des Bodensignals, dem tatsächlichen Bodenabstand, der Dielektrizitätszahl und der Permeabilitätszahl der Flüssigkeit zumindest annähernd bestimmt wird.

2. Verfahren nach Anspruch 1, dadurch gekennzeichnet, daß die rechnerische Auswertung nach der Gleichung

$$\frac{l_s}{l} = \frac{h_s - d}{h - d} = \frac{c_l}{c_{fl}} = \sqrt{\epsilon_r \ \mu_r}$$

erfolgt, wobei $l_s$ die scheinbare Flüssigkeitshöhe, l die tatsächliche Flüssigkeitshöhe, $h_s$ der scheinbare Bodenabstand, h der tatsächliche Bodenabstand, d der freie Abstand oberhalb des Flüssigkeitsspiegels, $c_l$ die Ausbreitungsgeschwindigkeit des Mikrowellensignals in Luft, $c_{fl}$ die Ausbreitungsgeschwindigkeit des Mikrowellensignals in der Flüssigkeit, $\epsilon_r$ die Dielektrizitätszahl der Flüssigkeit und $\mu_r$ die Permeabilitätszahl der Flüssigkeit ist.

3. Verfahren nach Anspruch 1 oder 2, dadurch gekennzeichnet, daß im Spektrum der empfangenen Signale - Meßsignal und Störsignale - mittels des rechnerisch ermittelten Wertes für die tatsächliche Füllstandshöhe eines der Signale als das Meßsignal identifiziert wird.

4. Verfahren nach Anspruch 3, dadurch gekennzeichnet, daß unter Berücksichtigung der Fehlerbandbreite der Dielektrizitäts- und Permeabilitätszahlen $\epsilon_r$ und $\mu_r$ und des Bodensignals der Wert für die tatsächliche Füllstandshöhe rechnerisch mit einer bestimmten Fehlerbandbreite ermittelt und mit dieser Fehlerbandbreite als Erkennungsfenster über das Spektrum der empfangenen Signale - Meßsignal und Störsignale - gelegt wird.

5. Verfahren nach einem der Ansprüche 1 bis 4, dadurch gekennzeichnet, daß das von der Antenne abgestrahlte Mikrowellensignal mit Impulsmodulation oder Frequenzmodulation moduliert wird.

**Fig.1**

**Fig. 2**